# FASCICULE DE BREVET EUROPEEN

(11) **EP 3 202 614 B1**
(45) Date de publication et mention de la délivrance du brevet: **12.12.2018**
(21) Numéro de dépôt: 17153428.2
(22) Date de dépôt: 27.01.2017
(51) Int. Cl.: B60N 2/24, B60N 2/42, B60N 2/427, F41H 7/04

(54) **BUTÉE DE SIÈGE ET SIÈGE COMPORTANT UNE TELLE BUTÉE**
SITZANSCHLAG UND SITZ MIT EINEM SOLCHEM SITZANSCHLAG
SEAT STOP AND SEAT COMPRISING SUCH SEAT STOP

(30) Priorité: 04.02.2016 FR 1600203
(43) Date de publication de la demande: 09.08.2017
(73) Titulaire: NEXTER Systems, 42328 Roanne Cedex (FR)
(72) Inventeur: Lassaigne, Eric, 18023 Bourges Cedex (FR)
(74) Mandataire: Cabinet Chaillot

(56) Documents cités:
- EP-A1- 2 857 260
- FR-A1- 2 812 590
- FR-A1- 2 932 428

## Description

Le domaine technique de l'invention est celui des butées de siège pour véhicule militaire.

Lors d'un choc dû à l'explosion d'une mine sous un véhicule, l'énergie du choc peut être transmise aux occupants du véhicule via l'assise du siège qu'ils occupent, ce qui peut gravement les blesser.

Afin d'éviter cette transmission d'énergie dommageable, aux occupants, il est connu du brevet FR2932428 un siège dont l'assise s'efface de sous son occupant en cas de choc dû à l'explosion d'une mine. Pour cela, le siège comporte une butée qui libère l'assise qui peut poursuivre son pivotement vers le bas lorsque l'effort exercé sur l'assise est au-delà d'un seuil admissible.

Cette butée est dimensionnée pour assurer sa fonction pour une plage de poids d'utilisateurs les plus représentatifs des personnels embarqués. Cependant à la limite inférieur de poids de cette plage, lors d'un choc de mine, l'effort appliqué sur l'assise risque d'être insuffisant pour provoquer la libération de l'assise ce qui risque d'aboutir à la blessure de l'occupant du siège. A l'inverse, à la limite supérieure de la plage de poids, l'effort appliqué sur l'assise risque d'être atteint lors de simples rebonds ou vibrations occasionnés par le véhicule dans son usage courant, ce qui entraine une libération intempestive de l'assise et la chute du personnel l'occupant.

L'invention a pour but d'améliorer la sensibilité de fonctionnement d'une butée de siège telle que décrite en conférant un fonctionnement satisfaisant pour les poids d'utilisateurs situés aux bornes de la plage de fonctionnement.

L'invention porte sur une butée de siège pour siège de véhicule blindé, butée cisaillable destinée à interférer lors du pivotement d'une assise avec un élément d'appui du siège et destinée à libérer ainsi le pivotement de l'assise du siège au-delà d'une position d'usage sensiblement horizontale de l'assise et ceci en cas d'effort sur l'assise supérieur à un niveau prédéterminé, butée caractérisée en ce qu'elle comporte au moins une goupille destinée à interférer par une de ses extrémités lors du pivotement de l'assise avec l'élément d'appui du siège, chaque extrémité de la goupille étant calibrée pour rompre au cisaillement à un niveau de force différent pour chaque extrémité, goupille apte à se translater relativement à l'élément d'appui du siège selon une direction longitudinale parallèle à un axe de pivotement de l'assise de manière à pouvoir choisir l'extrémité de la goupille destinée à venir en interférence avec l'élément d'appui.

Avantageusement, la différence de calibrage à la rupture est obtenue par une première réduction de section de la goupille au voisinage d'une première extrémité, première réduction de section plus importante que la réduction de section au voisinage de la seconde extrémité.

Avantageusement, le calibrage à la rupture de la première extrémité correspond à l'effort maximal tolérable par un occupant le plus léger d'une première sous plage d'utilisateurs.

Avantageusement, le calibrage à la rupture de la seconde extrémité correspond à l'effort maximal tolérable par un occupant le plus léger d'une deuxième sous plage d'utilisateurs.

Avantageusement, la butée comporte un moyen d'immobilisation de la translation de la goupille dans la position souhaitée.

Avantageusement, le moyen d'immobilisation comporte une cheville qui traverse la goupille et un guide fixe de la goupille.

L'invention porte également sur un siège pour véhicule blindé comportant une telle butée cisaillable.

Avantageusement, la butée cisaillable est solidaire d'une structure fixe du siège, l'élément d'appui du siège étant solidaire de l'assise.

Avantageusement, l'élément d'appui comporte deux ailes, chaque aile pouvant venir interférer lors du pivotement de l'assise avec une extrémité différente de la goupille.

L'invention sera mieux comprise à lecture de la description suivante, description faite en référence aux dessins en annexe, dessins dans lesquels :
La figure 1 représente une vue schématique de côté d'un siège en position d'usage, siège comportant une butée selon l'invention.

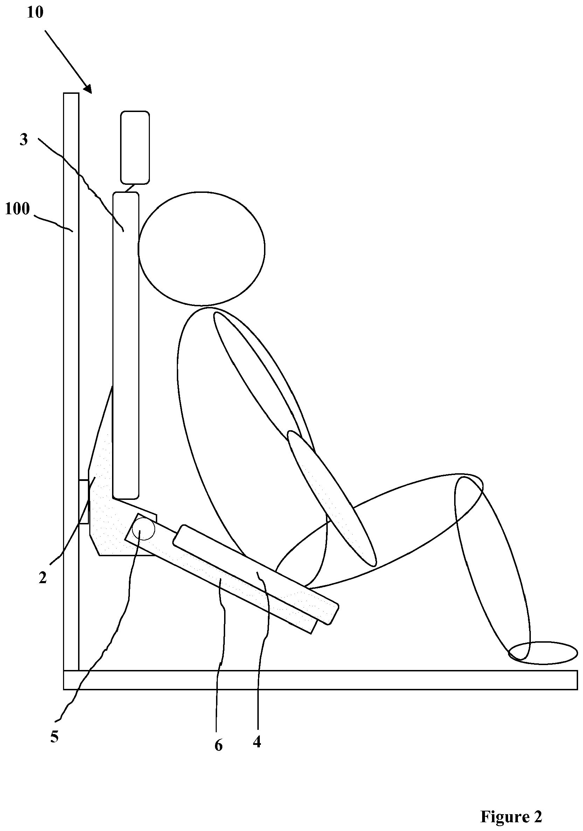

La figure 2 représente une vue schématique de côté d'un siège avec son assise libérée par le fonctionnement d'une butée selon l'invention.
La figure 3 représente une vue schématique de détail en coupe transversale d'une butée selon l'invention.
La figure 4 représente une vue schématique de détail en coupe transversale d'une butée selon l'invention.
La figure 5 représente une vue schématique de détail en coupe transversale d'une butée selon l'invention libérant l'assise du siège.

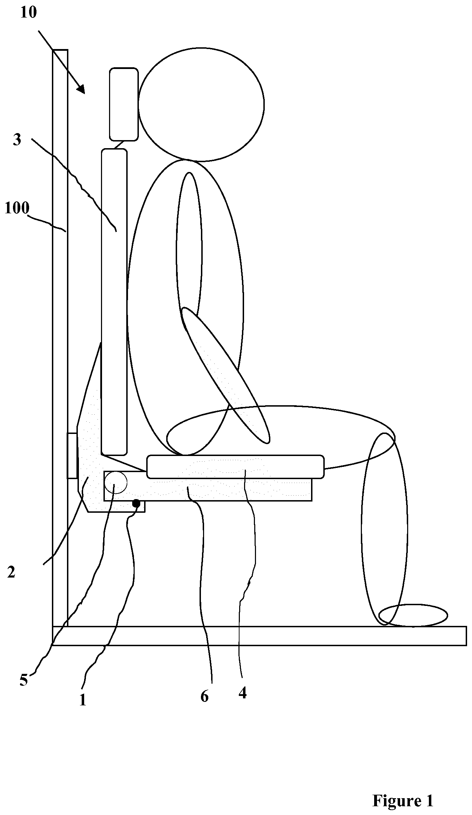

Selon la figure 1, un siège 10 pour véhicule blindé (véhicule non représenté) est solidaire d'une paroi interne 100 du véhicule au niveau d'une structure fixe 2 du siège 10. Cette structure 2 est solidaire d'un dossier 3 et d'une assise 4. Cette assise 4 est montée pivotante par rapport à un axe de pivot horizontal 5 par rapport à cette structure 2.

L'assise 4 pourra ainsi être relevée en une position sensiblement verticale (assise 4 amenée en contact avec le dossier 3) pour limiter l'encombrement du siège 10 en dehors des phases d'utilisation comme cela est représenté à la figure 1 du brevet FR2932428 de l'art antérieur.

En position d'usage, l'assise 4 est sensiblement horizontale, tel que visible à la figure 1. L'assise 4 est abaissée dans cette position d'usage par l'action du poids de l'occupant du siège sur l'assise 4 et est retenue dans cette position par une butée 1, qui est ici solidaire de la structure fixe 2 du siège, s'opposant à la poursuite du pivotement de l'assise 4 vers le bas.

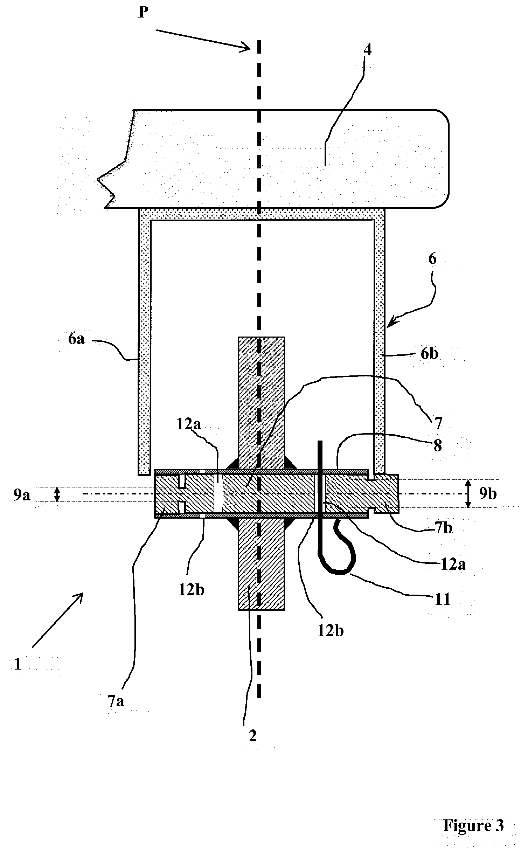

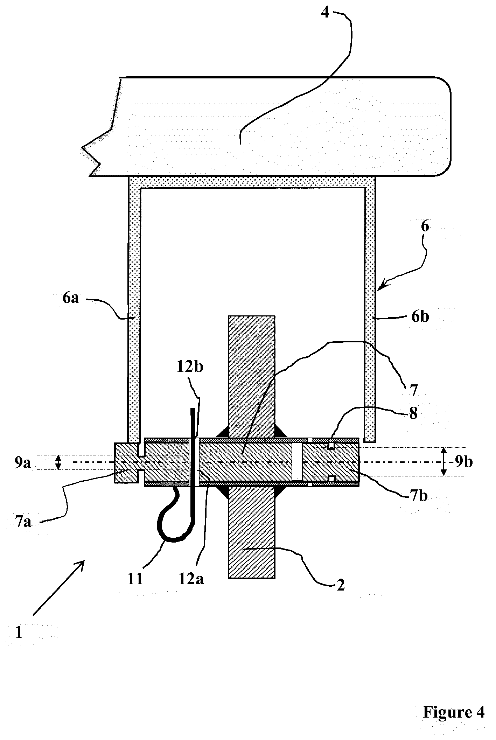

A cette fin, comme visible aux figures 3 et 4, la butée 1 comporte une goupille 7 qui est destinée à venir interférer transversalement, lors du pivotement de l'assise, par une seule de ses extrémités avec un élément d'appui 6 qui est ici un longeron 6 solidaire de l'assise 4.

La goupille 7 est apte à coulisser selon son axe longitudinal et parallèlement à l'axe de pivot 5 de l'assise.

On a représenté par P le plan de symétrie de l'élément d'appui 6 et qui est perpendiculaire à l'axe de pivot 5.

Cette translation selon l'axe longitudinal de la goupille 7 est guidée par un tube 8 solidaire de la structure 2 du siège 10. La longueur de la goupille 10 sera choisie par l'Homme du Métier de manière telle que le coulissement de la goupille 1 ne permette de placer qu'une seule extrémité de la goupille 7 en travers du mouvement de pivotement descendant de l'élément d'appui 6.

Comme on le voit à la figure 3, l'élément d'appui 6 comporte ainsi deux ailes 6a et 6b. En fonction de la position axiale de la goupille 7 dans son tube 8, chaque aile 6a ou 6b peut venir interférer lors du pivotement de l'assise 4 avec une extrémité différente 7a ou 7b de la goupille.

Les ailes 6a et 6b sont ici deux parois parallèles d'un élément d'appui 6 réalisé sous la forme d'un longeron profilé soutenant l'assise 4.

La goupille 7 est calibrée à la rupture au voisinage de chacune de ses extrémités 7a et 7b. Le calibrage pourra par exemple être obtenu par une réduction locale 9a et 9b de la section de la goupille 1.

La section 9a au voisinage de la première extrémité 7a sera plus réduite que la section 9b au voisinage de la seconde extrémité 7b, ainsi l'effort nécessaire au sectionnement de la goupille sera différent selon l'extrémité sollicitée.

Cet effort sera plus important à la seconde extrémité 7b qu'à la première extrémité 7a.

Les sections réduites 9a et 9b seront choisies en fonction des masses des occupants des sièges aux bornes de la plage de masse des occupants potentiels. De telles plages de masse des occupants sont préconisées de façon classique par les normes anthropométriques du département de la défense des États-Unis (MIL STD 1472).

L'Homme du Métier divisera la plage de poids d'occupants en deux sous plages. Une première sous plage correspondant aux occupants les plus légers, et une seconde sous plage correspondant aux occupants les plus lourds. Le calibrage à la rupture de chaque extrémité 7a et 7b sera choisie de telle manière que la rupture soit obtenue avec un choc de mine pour la masse d'occupant la plus faible de chaque sous plage.

Ainsi, la première section 9a qui est la plus réduite des deux sections réduites 9a et 9b, sera choisie de manière à rompre dans les conditions d'un choc de mine, pour une masse d'occupant la plus faible de la sous plage d'occupants envisagés. La figure 4 montre le positionnement de la goupille pour une telle configuration. Dans ce cas, c'est l'aile 6a de l'élément d'appui qui vient interférer avec la goupille 7.

La seconde section 9b qui est la plus grande, sera choisie bien sûr de manière à rompre dans les conditions d'un choc de mine pour l'occupant le plus léger de la sous plage des occupants lourds, mais le renforcement de la section de la goupille lui permettra de résister aux conditions de roulage les plus contraignantes, pour la gamme d'utilisateurs lourds. La figure 3 montre le positionnement de la goupille pour une telle configuration. C'est alors l'aile 6b de l'élément d'appui 6 qui vient interférer avec la goupille 7.

Ainsi, chaque occupant pourra, en fonction de son poids, choisir de mettre en opposition à l'élément d'appui 6, la section de goupille 7 la plus adaptée à son cas. Chaque section correspondant à une sous plage de poids différente.

On notera qu'il est à la portée de l'Homme du Métier de procéder à une inversion des moyens composant la butée 1 de façon à ce que ce soit la goupille 7 qui soit solidaire de l'assise 4. Dans ce cas la goupille viendra en contact avec un élément d'appui qui sera solidaire de la structure fixe 2 du siège 10.

Pour chaque position de goupille 7, une cheville 11 traversant le tube de guidage 8 et la goupille 7 au travers d'un perçage 12a coïncidant avec un autre perçage 12b du tube 8 permet d'immobiliser la goupille 7 dans la position choisie.

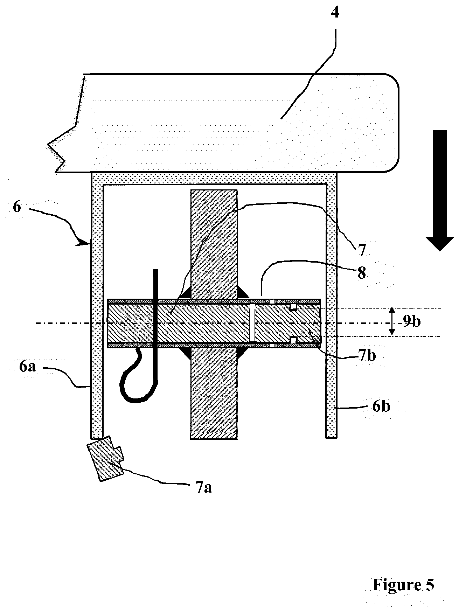

Comme visible à la figure 5, l'appui de l'élément d'appui 6 sur la goupille a provoqué la rupture de la goupille 7 au niveau de la réduction de section 9a de la goupille provoquant un abaissement de l'assise 4 vers le bas.

## Revendications

1. Butée de siège (1) pour siège (10) de véhicule blindé, butée (1) cisaillable destinée à interférer lors du pivotement d'une assise (4) avec un élément d'appui (6) du siège (10) et destinée à libérer ainsi le pivotement de l'assise (4) du siège (10) au-delà d'une position d'usage sensiblement horizontale de l'assise (4) et ceci en cas d'effort sur l'assise (4) supérieur à un niveau prédéterminé, butée (1) ***caractérisée en ce qu***'elle comporte au moins une goupille (7) destinée à interférer par une de ses extrémités (7a, 7b) lors du pivotement de l'assise (4) avec l'élément d'appui (6) du siège (10), chaque extrémité (7a, 7b) de la goupille (7) étant calibrée pour rompre au cisaillement à un niveau de force différent pour chaque extrémité (7a, 7b), goupille (7) apte à se translater relativement à l'élément d'appui (6) du siège (10) selon une direction longitudinale parallèle à un axe (5) de pivotement de l'assise (4) de manière à pouvoir choisir l'extrémité de la goupille (7) destinée à venir en interférence avec l'élément d'appui (6).

2. Butée de siège (1) selon la revendication 1, **caractérisée en ce que** la différence de calibrage à la rupture est obtenue par une première réduction de section (9a) de la goupille (7) au voisinage d'une première extrémité (7a), première réduction de section (7a) plus importante que la réduction de section (9b) au voisinage de la seconde extrémité (7b) .

3. Butée de siège (1) selon une des revendications 1 à 2, **caractérisée en ce que** le calibrage à la rupture de la première extrémité (7a) correspond à l'effort maximal tolérable par un occupant le plus léger d'une première sous plage d'utilisateurs.

4. Butée de siège (1) selon la revendication 3, **caractérisée en ce que** le calibrage à la rupture de la seconde extrémité correspond à l'effort maximal tolérable par un occupant le plus léger d'une deuxième sous plage d'utilisateurs.

5. Butée de siège (1) selon une des revendications 1 à 4, **caractérisée en ce qu'**elle comporte un moyen d'immobilisation (11) de la translation de la goupille (7) dans la position souhaitée.

6. Butée de siège (1) selon la revendication 5, **caractérisée en ce que** le moyen d'immobilisation (11) comporte une cheville (11) qui traverse la goupille (7) et un guide fixe (12) de la goupille (7).

7. Siège (10) pour véhicule blindé (100) comportant une butée (1) selon une des revendications 1 à 6.

8. Siège (10) pour véhicule blindé (100) selon la revendication 7, **caractérisé en ce que** la butée (1) est solidaire d'une structure fixe (2) du siège (10), l'élément d'appui (6) du siège étant solidaire de l'assise (4).

9. Siège (10) pour véhicule (100) blindé selon la revendication 8, **caractérisé en ce que** l'élément d'appui (6) comporte deux ailes (6a,6b), chaque aile (6a,6b) pouvant venir interférer lors du pivotement de l'assise (4) avec une extrémité (7a,7b) différente de la goupille (11).

## Patentansprüche

1. Sitzanschlag (1) für den Sitz (10) eines gepanzerten Fahrzeugs, wobei der Anschlag (1) abscherbar und dazu bestimmt ist, während der Drehung einer Sitzfläche (4) mit einem Auflageelement (6) des Sitzes (10) zu interferieren und dazu bestimmt ist, somit die Drehung der Sitzfläche (4) des Sitzes (10) jenseits einer im wesentlichen waagrechten Gebrauchsstellung des Sitzes (4) freizugeben, und zwar dann, wenn der Druck auf die Sitzfläche (4) höher als ein vorgegebener Wert ist, wobei der Anschlag (1) **dadurch gekennzeichnet ist, dass** er mindestens einen Stift (7) umfasst, der dazu bestimmt ist, an einem seiner Enden (7a, 7b) während der Drehung des Sitzes (4) mit dem Auflageelement (6) des Sitzes (10) zu interferieren, wobei jedes Ende (7a, 7b) des Stiftes (7) kalibriert ist, um bei der Abscherung bei einer Druckhöhe zu brechen, die für jedes Ende (7a, 7b) verschieden ist, wobei der Stift (7) fähig ist, sich in Bezug auf das Auflageelement (6) des Sitzes (10) in einer Längsrichtung parallel zu einer Drehachse (5) des Sitzes (4) zu verschieben, um das Ende des Stiftes (7) wählen zu können, das dazu bestimmt ist, mit dem Auflageelement (6) zu interferieren.

2. Sitzanschlag (1) nach Anspruch 1, **dadurch gekennzeichnet, dass** der Kalibrierungsunterschied bei Bruch durch eine erste Querschnittsverminderung (9a) des Stiftes (7) in der Nähe eines ersten Endes (7a) erhalten wird, wobei die erste Querschnittsverminderung (7a) größer als die Querschnittsverminderung (9b) in der Nähe des zweiten Endes (7b) ist.

3. Sitzanschlag (1) nach einem der Ansprüche 1 bis 2, **dadurch gekennzeichnet, dass** die Kalibrierung bei Bruch des ersten Endes (7a) dem tolerierbaren maximalen Druck durch den leichtesten Sitzenden eines ersten Unterbereiches von Benutzern entspricht.

4. Sitzanschlag (1) nach Anspruch 3, **dadurch gekennzeichnet, dass** die Kalibrierung bei Bruch des zweiten Endes dem tolerierbaren maximalen Druck durch den leichtesten Sitzenden eines zweiten Unterbereiches von Benutzern entspricht.

5. Sitzanschlag (1) nach einem der Ansprüche 1 bis 4, **dadurch gekennzeichnet, dass** er ein Immobilisierungsmittel (11) für die Verschiebung des Stiftes (7) in die gewünschten Position umfasst.

6. Sitzanschlag (1) nach Anspruch 5, **dadurch gekennzeichnet, dass** das Immobilisierungsmittel (11) einen Dübel (11) umfasst, der den Stift (7) und eine feste Führung (12) des Stiftes (7) durchquert.

7. Sitz (10) für gepanzertes Fahrzeug (100), der einen Anschlag (1) nach einem der Ansprüche 1 bis 6 umfasst.

8. Sitz (10) für gepanzertes Fahrzeug (100) nach Anspruch 7, **gekennzeichnet dadurch, dass** der Anschlag (1) mit einer festen Struktur (2) des Sitzes (10) verbunden ist, wobei das Auflageelement (6) des Sitzes mit der Sitzfläche (4) verbunden ist.

9. Sitz (10) für gepanzertes Fahrzeug (100) nach Anspruch 8, **gekennzeichnet dadurch, dass** das Auflageelement (6) zwei Flügel umfasst (6a, 6b), jeder Flügel (6a, 6b) kann während der Drehung des Sitzes (4) mit einem verschiedenen Ende (7a, 7b) des Stiftes (11) interferieren.

## Claims

1. A seat stop (1) for an armoured vehicle seat (10), the stop (1) being shearable and intended to interfere, when pivoting a seating part (4), with a support element (6) of the seat (10), and intended to thereby release the pivoting of the seating part (4) of the seat (10) beyond a substantially horizontal position of use of the seating part (4) in case of a stress on the seating part (4) higher than a predetermined level, the stop (1) being **characterised in that** it comprises at least one pin (7) intended to interfere, by one of its ends (7a, 7b) when pivoting the seating part (4), with the support element (6) of the seat (10), each end (7a, 7b) of the pin (7) being sized to break by shearing at a force level that is different for each end (7a, 7b), the pin (7) being able to translate with respect to the support element (6) of the seat (10) along a longitudinal direction parallel to a pivot axis (5) of the seating part (4) so the end of the pin (7) that is intended to interfere with the support element (6) can be selected.

2. The seat stop (1) according to claim 1, **characterised in that** the difference in sizing for the break is obtained by a first reduction of cross section (9a) of the pin (7) at the vicinity of a first end (7a), the first reduction of cross section (7a) being greater than the reduction of cross section (9b) at the vicinity of the second end (7b).

3. The seat stop (1) according to one of claims 1 and 2, **characterised in that** the breaking calibration of the first end (7a) corresponds to the maximum stress tolerable by a lightest passenger of a first sub-range of users.

4. The seat stop (1) according to claim 3, **characterised in that** the breaking calibration of the second end corresponds to the maximum stress tolerable by a lightest passenger of a second sub-range of users.

5. The seat stop (1) according to one of claims 1-4, **characterised in that** it comprises immobilising means (11) for the translation of the pin (7) in the desired position.

6. The seat stop (1) according to claim 5, **characterised in that** the immobilising means (11) comprises a peg (11) which passes through the pin (7) and a fixed guide (12) of the pin (7).

7. A seat (10) for armoured vehicle (100) comprising a stop (1) according to one of claims 1-6.

8. The seat (10) for armoured vehicle (100) according to claim 7, **characterised in that** the stop (1) is integral with a fixed structure (2) of the seat (10), the support element (6) of the seat being integral with the seating part (4).

9. The seat (10) for armoured vehicle (100) according to claim 8, **characterised in that** the support element (6) comprises two wings (6a, 6b), wherein each wing (6a, 6b) can interfere, when pivoting the seating part (4), with a different end (7a, 7b) of the pin (11).
